# EUROPEAN PATENT SPECIFICATION

(11) **EP 2 885 324 B1**
(45) Date of publication and mention of the grant of the patent: **15.08.2018**
(21) Application number: 12812079.7
(22) Date of filing: 11.09.2012
(51) Int. Cl.: C08C 19/00, C08K 5/17

(54) **NANOCLAY (NC) HYBRIDS AND ELASTOMER-NANOCLAY COMPOSITES PRODUCED THEREOF**
NANOTONHYBRIDE UND DARAUS HERGESTELLTE ELASTOMERNANOTONZUSAMMENSETZUNGEN
NANOARGILES HYBRIDES ET COMPOSITES ÉLASTOMÈRE-NANOARGILE À BASE DE CELLES-CI

(43) Date of publication of application: 24.06.2015
(73) Proprietor: T.G.L. S.P. Industries Ltd., 2060000 Yokneam (IL)
(72) Inventor: SCHWARTZ, Adam, 3460827 Haifa (IL)
(74) Representative: Regimbeau
(86) International application number: PCT/IL2012/050360
(87) International publication number: WO 2013/008241

(56) References cited:
- EP-A1- 2 102 017
- WO-A2-2010/069341
- US-A1- 2005 027 058
- US-A1- 2007 193 669
- US-A1- 2011 060 086
- US-A1- 2011 130 507
- US-B1- 6 407 155
- WOOK-SOO KIM ET AL: "Effect of 3-aminopropyltriethoxysilane and N,N - dimethyldodecylamine as modifiers of Na + -montmorillonite on SBR/organoclay nanocomposites", JOURNAL OF APPLIED POLYMER SCIENCE, 1 January 2010 (2010-01-01), pages NA-NA, XP055257308, US ISSN: 0021-8995, DOI: 10.1002/app.31861

## Description

The present invention relates to nanoclay (nc) hybrids and composites of elastomers and nanoclays.

Efforts to replicate natural rubber led to synthesis of rubbery copolymers such as styrene and butadiene, widely known as SBR, or styrene-butadiene rubber. SBR may be used in producing tires, which accounts for about half of the world consumption, over 10 million tons per year, of synthetic rubber.

A number of ingredients are added to synthetic rubber in order to obtain certain desirable properties. The most important ingredients are those, known as the cure package, that cause interlinking reactions to take place when the mix is "cured." In order to minimize the risk of premature cure, they are usually added at the end of mixing. The cure package usually consists of sulfur and one or more "accelerators" (e.g., sulfenamides, thiurams, or thiazoles), which make the sulfur interlinking reaction occur faster and more efficiently.

Two other ingredients that play an important role in vulcanization chemistry are known as "activators," commonly zinc oxide and stearic acid. These compounds react together and with accelerators to form a zinc sulfurating compound, which in turn is the key intermediary in adding sulfur to a diene elastomer and creating sulfur interlinks.

Almost every conceivable material has been added to rubber in attempts to cheapen and stiffen it. Two particulate fillers are outstanding because they also strengthen elastomers to a remarkable degree. The most important, used almost universally, is finely divided carbon black, prepared by incomplete combustion of oil or gas. Another reinforcing filler with particles of similar shape and size is finely divided silica (silicon dioxide, SiO₂), prepared either by burning silicon tetrachloride or by acid precipitation from a sodium silicate solution.

Both carbon black and silica, when added to a mix compound at a concentration of about 30 percent by volume, raise the elastic modulus of the rubber by a factor of two to three. They also confer remarkable toughness, especially resistance to abrasion, on otherwise weak materials such as SBR. If greater amounts are added, the modulus will be increased still further, but the strength will then begin to fall. Moreover, there are general disadvantages of reinforcement with carbon black or silica, such as lower springiness (resilience) and a decrease in the initial high stiffness after flexing. Such composites are thus relatively brittle at low temperatures, for example. Elastomeric composites with CB or silica are also relatively difficult to prepare. Many applications may require coloured elastomeric composites.

For a filler to be reinforcing, it appears that the filler particles must be small- for instance, 10-50 nanometres in diameter-and that the elastomer must adhere well to them. If either of these conditions is absent, the reinforcing power will be lessened.

The effect of nanoclays modified by hydrolysed mercaptosilane, as a substitute for carbon black, on the properties of SBR compounds, was reported at the 4^{th} International Conference on nanotechnology for the plastics & rubber industries, http://www.plastic.org.il/nano/nano_02_09_shenkar/PresNano1Feb_09_adam.ppt#2.

In short, modified nanoclays may be produced from reacting nanoclays (NCs), Montmorillonites such as Cloisite 30B, with mercaptosilanes. Such hybrids have been found useful in at least partially substituting for carbon black in elastomeric composites-for example the modified NCs could replace 30phr (Parts per Hundred) CB by 15 phr NC (7.5 phr of modified NC or 4.2 phr of neat silicate) without reduction of modulus and minor reduction of tensile properties.

The object of the present invention is to further improve and diversify the modified NCs and their production to improve various properties of the products produced with them, as well as to provide new compositions of the NCs and other ingredients that exhibit improved or desired properties. The present invention is defined in the claims 1-14.

### List of materials:

### Abrreviation/

| **Trade Name Elastomers** | **Chemical Composition** | **Example Provider** |
|---|---|---|
| Synpol 1502 | cold emulsion Styrene Butadiene Rubber Styrene 23% ML(1+4)100-46 * | Ameripol Synpol |
| Keltan 512 | regular Ethylene Propylene Terpolymer ENB cont-4.5% ML(1+4)100C-55 | DSM |
| Krynac 50.75 | cold emulsion Butadiene Acrylonitrile rubber Acetonitrile (ACN) content 48% ML(1+4)100-75 | Bayer |
| SMR 10 | Natural Rubber, dirt content 0.1% | Standard Malaysian Rubber |
| BR 1220 | Polybutadiene Rubber ML(1+4)100-45 | Nippon Zeon |
| ENB | ethylene norbornene | |

### Nanoclays

| | | |
|---|---|---|
| Cloisite 15A | Montmorillonite (MMT) treated with dimethyl hydrogenated tallow ammonium | Southern Clays |
| Cloisite 30B | MMT treated with methyl dihydroxyethyl hydrogenated tallow ammonium | Southern Clays |

### Silanes

| | | |
|---|---|---|
| Si 69 | TESPT bis(triethoxysilylpropyl) tetrasulfane | Degussa |

### Other activators

| | |
|---|---|
| TEA | triethanol amine |
| IPPD | N-isopropyl-N'-phenyl-pa raphenylenediamine |
| DDA | dodecyl-amine |

### Processing Oils

| | |
|---|---|
| Cumsol 27 | aromatic Oil |

### Vulcanization Agents :Accelerators

| | | |
|---|---|---|
| TBBS (Santocure) | N-tertbutyl-benzothiazyl sulphenamide | Flexsys |
| MBT (Perkacit) | mercaptobenzothiazol | Flexsys |
| TMTD (Perkacit) | tetramethylthiuram disulphide | Flexsys |
| CBS (Santocure) | N-cyclohexyl-2-benzothiazyl sulphenamide | Flexsys |
| MBS (Santocure) | 2-(4-morpholinyl-mercapto)-benzothiazole | Flexsys |
| DPG (Perkacit) | diphenyl guanidine | Flexsys |
| TMTM (Perkacit) | tetramethyl thiuram monosulphide | Flexsys |

### Processing Aids

| | | |
|---|---|---|
| Struktol TS35 | aliphatic-aromatic soft resins | Schill+Seilacher |
| Europrene Sol T 161 | SBS -thermoplastic Styrene Butadiene Styrene | Polimeri Europa |
| Cumsol 27 | Aromatic oil | Kumho |

### Hydrolysis catalysts

| | | |
|---|---|---|
| Ufacid K | Dodecylbenzenesulphonic acid | Unger |

### Rubber properties

### Rheological properties

mV = minimum viscosity, measured in a rheological test, expressed as the torque applied (lb-inch) to an elastomeric composite, before vulcanization
t2 = scorch time =time (minutes)from beginning of vulcanization, until torque increases during the rheological test, to 2 lb/inch
t90 = Optimum vulcanization time (time until torque reaches 90% of maximum value)
S1 =max value of torque
Tan= the tangent modulus is the slope of a compression stress-strain curve
ML(1+4): Mooney viscosity after (1+4) minutes: Viscosity of rubbers is measured using the shearing disk viscometer. The torque of the rotor is taken after 1 minute preheating the rotor plus 4 minute after that.

### Mechanical Properties

Tensile = Tensile Strength (Stress at break point) (MPa)
Elongation =Elongation at break(Strain at break point) (%)
M100, M200 , M300 (Modula = Stress at 100% strain ,200 % strain , 300%) Tear strength (strength required to initiate a tear in a material)
Yerzley Elasticity (Resilience) - measure of rubber elasticity determined on a Yerzley device.

Figure 1 presents a scheme of equipment that may be used to produce modified NC hybrids;
Figure 2 shows a schematic drying tray for drying off the modified NC embodiments.
Figure 3 schematically shows a reaction for producing a prior art modified (hybrid) NC, named RRA 10;
Figure 4 schematically presents a reaction for preparation of one modified NC embodiment RRA 181-1 from mixing NC Cloisite 15A and IPPD before Si69 (TESPT) is added;
Figure 5 presents in graphical form some of the physical characteristics of elastomeric composites made from NC hybrids, one hybrid is prior art hybrid RRA 10, and the other is the hybrid shown in Figure 4;
Figure 6 schematically describes production of RRA 189-2, made from mixing Cloisite and DDA and SBS before Si69 is added;
Figure 7 compares properties of three elastomeric composites made from RRA 10, RRA 181-1 and RRA 189-2;
Figure 8 shows a reaction used to prepare RRA 50R, another prior art modified NC, which is used with MBS to prepare an elastomeric composite;
Figure 9 shows a reaction to prepare an embodiment RRA 190-5, which is also used with MBS to prepare an elastomeric composite;
Figure 10 present properties of the elastomeric composites S278-1G, S274-5G, made from RRA 50R and RRA 190-5;
Figure 11 presents production of another modified NC embodiment, RRA 189-4, identical to RRA 189-2 (Figure 6), however in which acetic acid is not added together with the TESPT;
Figure 12 shows a reaction to produce a modified NC in which the solvent is chloroform;
Figure 13 shows a reaction to produce a NC hybrid in which the solvent is a mixture of isopropanol (IPA) and water;
Figure 14 graphically depicts physical characteristics of elastomeric composite prepared from RRA 190-5 and the two hybrids shown in Figures 12 and 13;
Figure 15 shows production of RRA 194-2, which is made with chloroform: acetone mixture (2:1);
Figure 16 schematically shows production of RRA 195-1 made with water: acetone mixture (2:1), under the same conditions and ingredients as RRA 194-2 and RRA 202-1;
Figure 17 presents in a graph readings from a rheometer (Alpha Technologies MDR2000) at 150°C for said elastomeric composites made from hybrids RRA 194-2 and RRA 195-1, as well as said elastomeric composites made from RRA 194-2 and RRA 202-1,
and Figure 18 shows in graph form stress-strain properties for the same elastomeric composites.

### DETAILED DESCRIPTION OF THE SELECTED EMBODIMENTS

For a better understanding of the invention and to show how it may be carried into effect, reference will now be made, purely by way of example, to the accompanying drawings.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention; the description taken with the drawing making apparent to those skilled in the art how the several forms of the invention may be embodied in practice. In discussion of the various figures described herein below, like numbers refer to like parts. The drawings are generally not to scale.

Modified nanoclays may be produced from reacting nanoclays (NCs) such assurface modified montmorillonites, e.g. Cloisite 30A®, with mercaptosilanes. Such hybrids have been found to be useful in substituting at least part of a portion of carbon black (CB) in elastomer formulas, while essentially retaining the desired properties imparted by the CB at the original levels. An advantage of these modified NC is that typically, relatively small portions are required to added to the compounds based on various elastomers to achieve similar qualities. However, there was need to further improve and diversify modified NCs, in particular for manufacture of high-performance elastomeric composites (rubber compounds), e.g elastomeric composites with high tear and/or abrasion resistance.

Antioxidant is a substance added in small quantities to hydrocarbons which are susceptible to oxidation, such as rubbers, to inhibit or slow oxidative processes, while being itself oxidized. In primary antioxidants (also called free-radical scavengers), antioxidative activity is implemented by the donation of an electron or hydrogen atom to a radical derivative. These antioxidants are usually sterically hindered amines (p-Phenylene diamine, trimethyl dihydroquinolines, alkylated diphenyl amines) or substituted phenolic compounds with one or more bulky functional groups such as a tertiary butyl.

The inventor has now found that surprisingly, improvement of elastomeric composites containing modified NCs may be performed by changes in the production of the modified NCs, for example by adding IPPD (N-isopropyl-N'-phenyl-paraphenylenediamine) or DDA (dodecyl amine) or other amines during the manufacture of the NCs, and optionally by performing further changes to the production of the modified NCs.

In particular, some embodiments exhibit very high tear resistance, some even over 60N/mm. Whereas prior art elastomer compositions, not containing NCs, that were designed to have such high tear resistance, typically contained as much as 50-60 parts CB (carbon black), nevertheless they sometimes failed to accomplish the desired mechanical properties. In contrast, some embodiments are now found to reliably replace up to 35 parts of the CB or about 30 phr silica, with merely about 15-20 NC to achieve the same strength. In general, the elastomeric composition embodiments generally exhibit improved qualities over elastomeric compositions of similar content that do not include NCs with amines.

In some embodiments, elastic properties such as rebound (Yerzley resilience, tangent) were greatly improved. In some embodiments, ageing properties were also improved. In some embodiments, lighter products are obtained for the same degree of reinforcement, as compared to elastomer composites with prior art components.

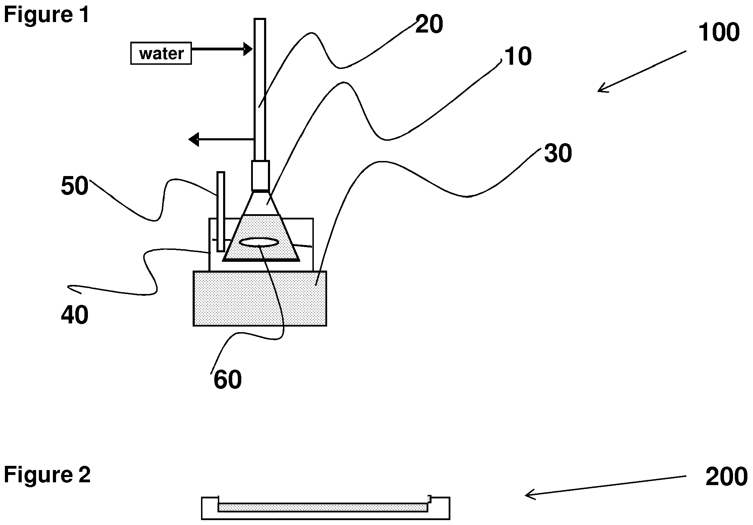

Figure 1 presents a scheme of equipment that may be used to produce modified NC embodiments designated as RRA XXX hybrids. The system 100 includes an Erlenmeyer flask 10, a reflux column 20 fitting onto flask 10, heating and magnetic stirring plate 30, immersion bath 40 placed on plate 30, magnet 50 in flask 10, and thermometer 60 fitting into flask 10.

Figure 2 shows a schematic drying tray 200, preferably made of ceramic material, for drying off the modified NC embodiments.

### Elastomeric composites with Carbon Black (CB)

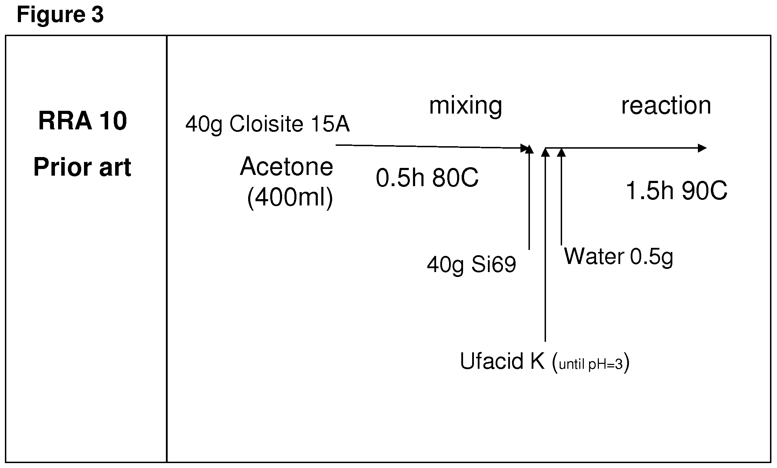

Figure 3 schematically shows a reaction for producing a prior art modified NC, named RRA 10.. Dodecylbenzensulfonic acid is an efficient catalyst for hydrolysis and condensation of silane, which was added until a pH=3was attained.

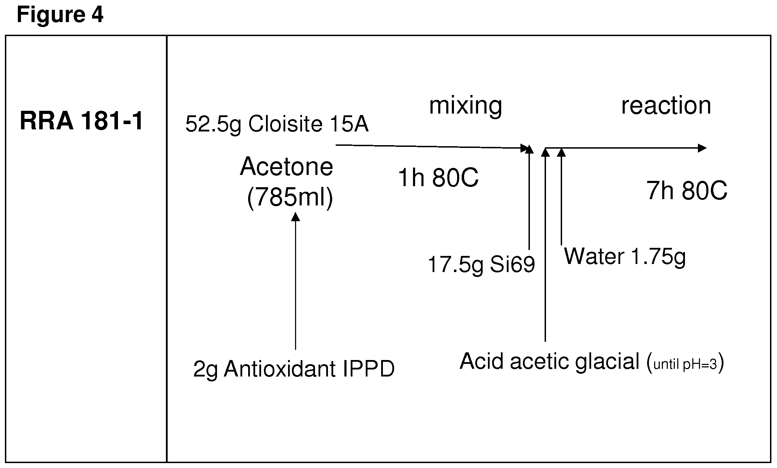

Figure 4 schematically presents a reaction for preparation of one modified NC embodiment. Like in production of RRA 10, the mercaptosilane Si69 is added to the NC Cloisite 15A, however IPPD is added to the NC (with stirring the resultant mixture at 80°C for one hour) before Si69 is added.

Table 1 presents the ingredients of S267-1 and S257-2R, SBR rubber composites with some CB (HAF N330), and prepared from RRA 10 and RRA 181-1, respectively.

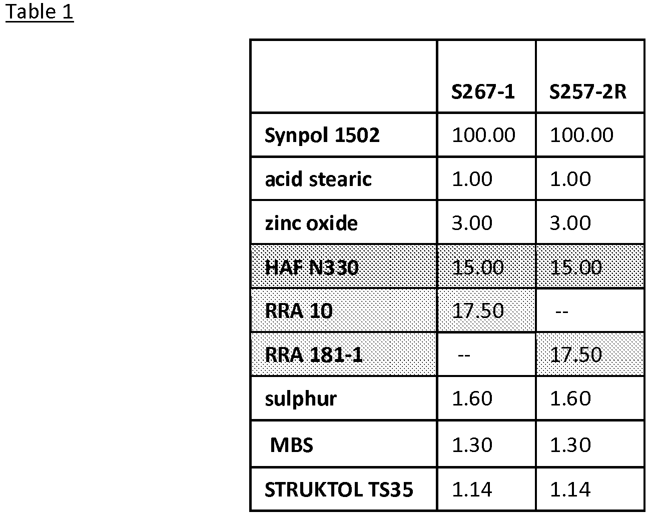

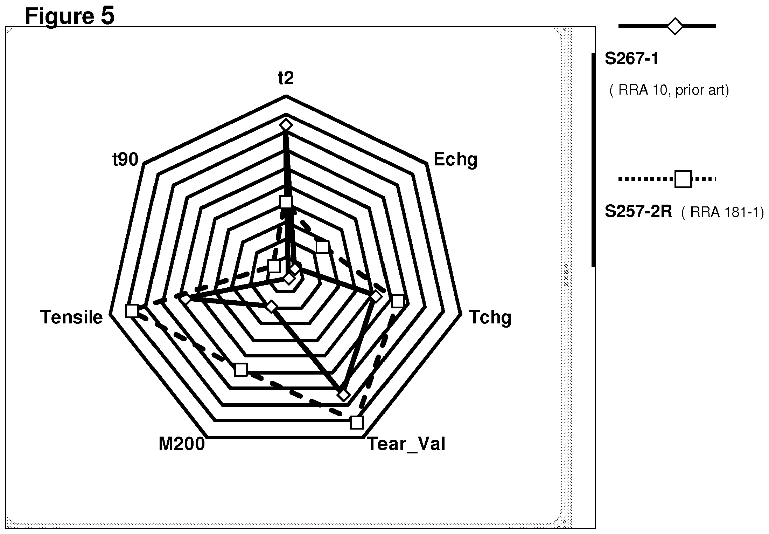

Table 2 presents the properties of the compositions S267-1 and S257-2R measured at 150°C. Some key features are also shown in graphic form in Figure 5.

**Table 2**

| | **S267-1** | **S257-2R** |
|---|---|---|
| **Rheological properties:** | | |
| **MV Ib-in** | 0.79 | 1.06 |
| **t2 min** | 5.88 | 2.87 |
| **t90 min** | 25.43 | 23.29 |
| **t100 min** | 35.93 | 36.00 |
| **S1 min** | 12.46 | 14.36 |
| **tan** | 0.035 | 0.032 |
| **S1-mV** | 11.67 | 13.30 |

| **Mechanical properties:** | | |
|---|---|---|
| **Vulc time min** | 28.00 | 26.00 |
| **Hardness ShA** | 63 | 70 |
| **Tensile MPa** | 18.59 | 23.16 |
| **Elongation %** | 435 | 403 |
| **M100 MPa** | 2.69 | 5.06 |
| **M200 MPa** | 6.90 | 10.79 |
| **M300 MPa** | 11.00 | 16.66 |

| **Ageing at 70h100°C** | | |
|---|---|---|
| **Hchg ShA** | 9 | 6 |
| **Tchg %** | -24.15 | -15.28 |
| **Echg %** | -55.61 | -41.88 |
| **Tear N/mm** | 52.10 | 57.20 |

The addition of the amine significantly improved the tear resistance, modulus at various stretching lengths, tensile strength and hardness. In addition, ageing properties of the compound are improved

It may be important that an amine such as DDA (dodecylamine) be added to NC (e.g. Cloisite 15A) before adding the TESPT (Si69), perhaps because in such way the long-chain amine continues the process of increasing distance between the layers of NC (a process begun during production of the NC hybrid by treating MMT with quaternary tallow ammonium salt). The silanisation of NC may thereby occur on a larger surface.

However, note that the reactions to prepare the RRA compositions are not necessarily carried out to completion, since experiments have so far shown that after 7 hours of reaction with the TESPT there were no significant improvements in the mechanical properties of the products.

Alternative NC materials that may provide similar advantageous properties: Commercially treated NCs such as: Cloisite 10A, 15A, 20A, 25A and 30B of Southern Clays; Nanomer 1.31 ps, 1.28E and 1.34 TCN of Nanocor. In general, the Commercially treated NCs are montmorillonites in which sodium ions are exchanged with ammonium or aminium ions.

Elastomers such as the entire range of NBR Krynac with ACN content 28, 33, 38, 44 and of various viscosities-of Lanxess, Nipol of Zeon), and EPDM (Keltan 512,512/50 of DSM, Du Pont ,Dow Elastomers, Bayer) may also be improved by incorporation of the improved modified NCs.

### Elastomeric composites without Carbon Black (CB), accelerator TBBS

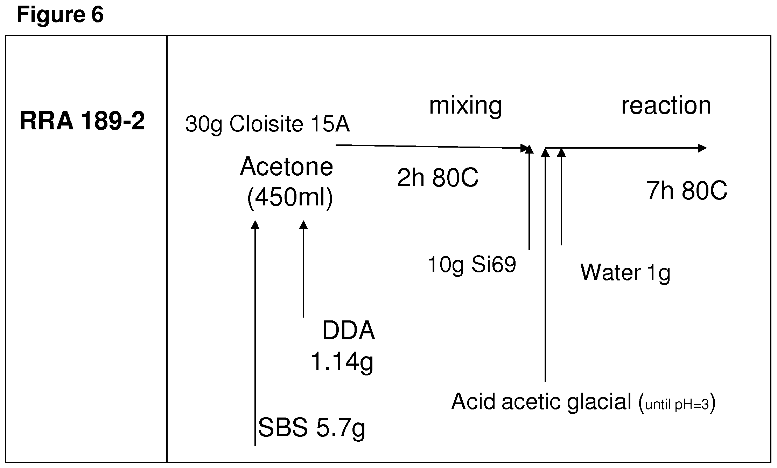

Another group of elastomeric composite embodiments that were produced were devoid of CB. Three elastomeric composites were made, S96-1G comprised of (prior art) RRA 10, S266-1G comprised afore mentioned RRA 181-1, and S270-1G comprised RRA 189-2, whose production is schematically presented in Figure 6.

Table 3 lists the ingredients in the three elastomeric composites

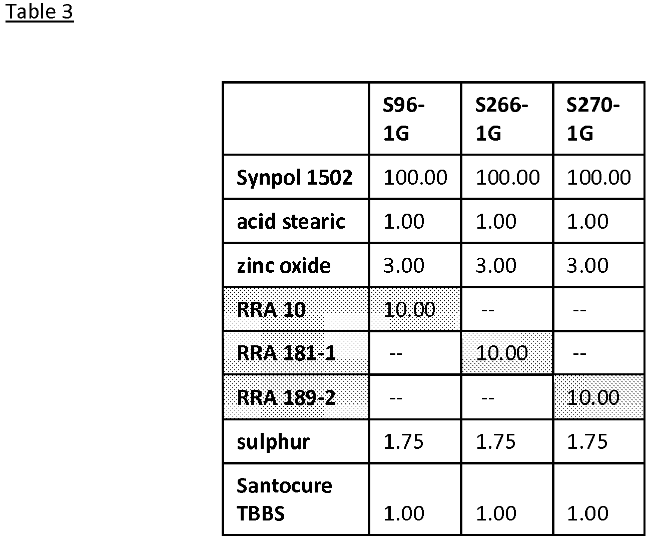

In production of RRA 189-2, SBS as dispersant was added to the mix of nanoclay and the amine DDA before the mixing for two hours at 80°C. Note that the amine DDA is used to make RRA 189-2, compared to the amine IPPD used in making RRA 181-1.

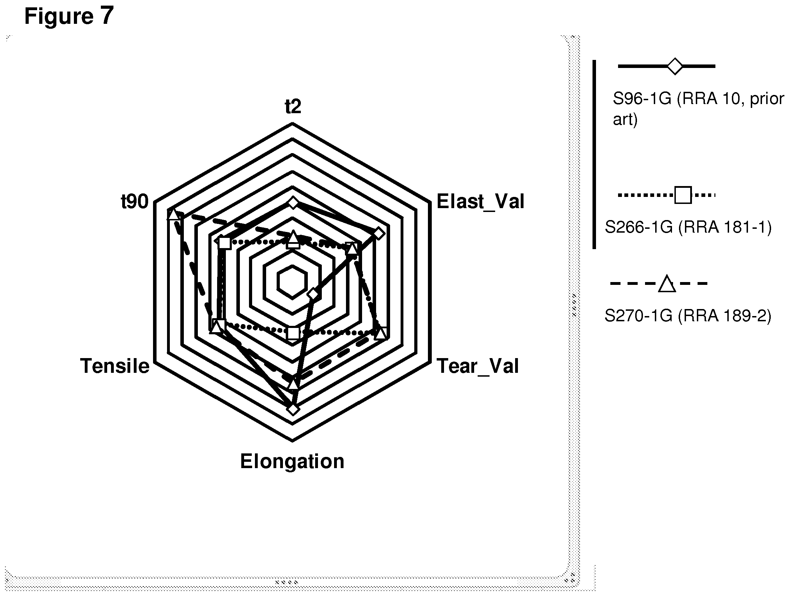

Table 4 and Figure 7 compare properties of the three elastomeric composites, measured at 170°C.

**Table 4**

| | **S96-1G** | **S266-1G** | **S270-1G** |
|---|---|---|---|
| **Rheological properties:** | | | |
| **MV Ib-in** | 0.76 | 0.63 | 0.50 |
| **t2 min** | 2.52 | 1.27 | 1.45 |
| **t90 min** | 9.75 | 10.01 | 6.28 |
| **S1 min** | 10.59 | 9.13 | 8.09 |
| **tan** | 0.029 | 0.023 | 0.022 |
| **S1-mV** | 9.83 | 8.50 | 7.59 |

| **Mechanical properties:** | | | |
|---|---|---|---|
| **Vulc time min** | 12 | 13 | 9 |
| **Hardness ShA** | 48 | 57 | 55 |
| **Tensile MPa** | 10.40 | 10.40 | 10.61 |
| **Elongation %** | 519 | 327 | 454 |
| **M200 MPa** | 2.39 | 5.57 | 3.70 |
| **M300/M100** | 3.12 | 3.54 | 3.19 |
| **Tear N/mm** | 24.4 | 39.2 | 39.1 |
| **Elast Yerzley %** | 79.32 | 76.44 | 76.46 |

As with the elastomeric composites having CB, the elastomeric composite embodiments with the modified NC that comprises amine (DDA or IPPD) have improved tear resistance, shear modulus at various stretching lengths, and hardness, with essentially no change in elasticity. The two embodiments S266-1G and S270-1G have similar tear resistance, tensile strength, hardness and elasticity. The main improvement resulting from the incorporation of DDA and SBS over incorporation of IPPD was increasing scorch time (t2) and reducing of vulcanization time (DDA as amine is also a strong accelerator). However, IPPD has anti-ozone properties that may improve the wear resistance of the elastomeric composites.

### Elastomeric composites without Carbon Black (CB), and with accelerator MBS

The elastomeric composites S96-1G , S266-1G and S270-1G mentioned above were made with, amongst other ingredients, accelerator TBBS. Additional elastomeric composites were prepared without CB, in which the accelerator TBBS is replaced with accelerator MBS.

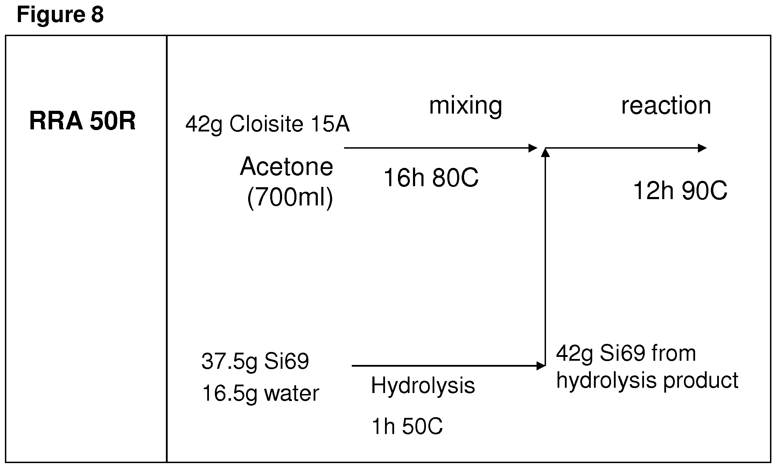

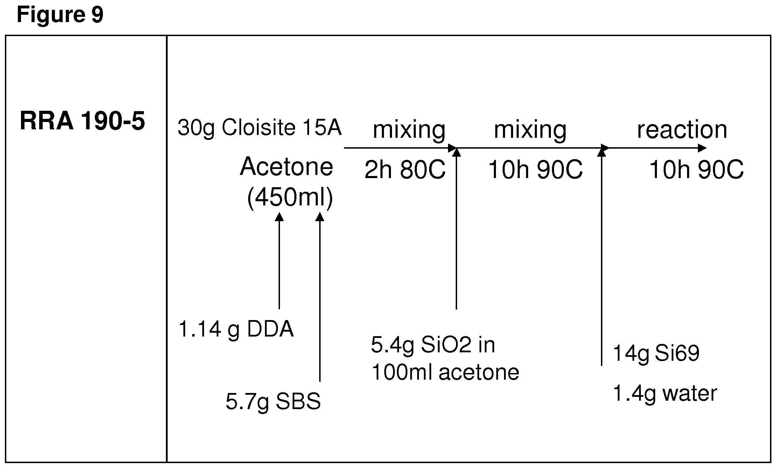

Figure 8 shows a reaction used to prepare RRA 50R, a prior art modified NC, which is in turn used with MBS and other ingredients to prepare an elastomeric composite; hydrolysis of silane was proceeded before mixing with NC. Figure 9 shows a reaction to prepare an embodiment RRA 190-5, which is also used with MBS to prepare an elastomeric composite.

Silica (SiO₂) was added in the mix containing NC, DDA. We may presume that OH functional groups present on the surface of SiO₂, activated with amine, may also react with silane further along in the reaction step, i.e. there may be an advantage to adding silica to the NC in producing the hybrid, rather than adding the silica to the elastomer during vulcanization.

Table 5 list the ingredients used to prepare two elastomeric composites, S278-1G, that includes prior art NC, RRA 50R, and embodiment S274-5G, that includes RRA 190-5.

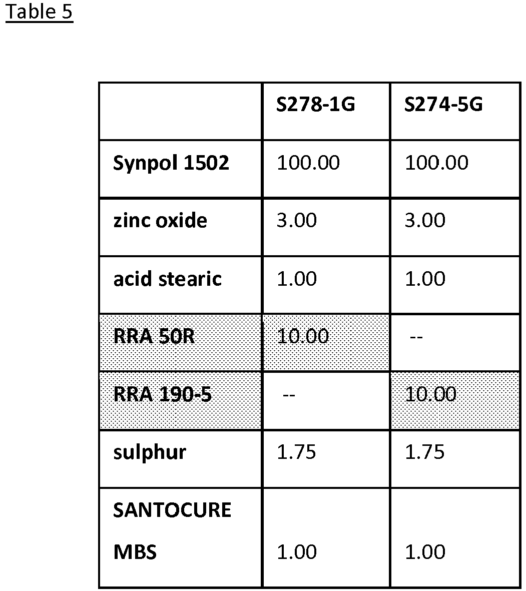

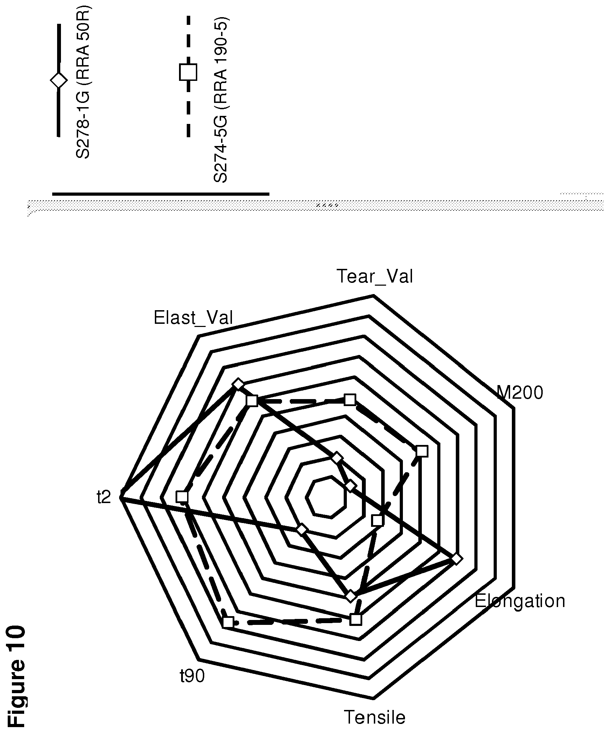

Table 6 and Figure 10 present properties of the elastomeric composites S278-1G, S274-5G.

**Table 6**

| | **S278-1G** | **S274-5G** |
|---|---|---|
| **Rheological properties:** | | |
| **mV** | **0.55** | **0.61** |
| **t2 min** | **5.14** | **3.53** |
| **t90 min** | **23.98** | **21.12** |
| **tan** | **0.023** | **0.022** |
| **S1-mV** | **8.69** | **7.71** |

| **Mechanical properties:** | | |
|---|---|---|
| **Vulc time min** | **26** | **24** |
| **Hardness ShA** | **52** | **55** |
| **Tensile MPa** | **9.94** | **11.08** |
| **Elongation %** | **538** | **453** |
| **M200 MPa** | **2.48** | **4.02** |
| **M3/M1** | **2.43** | **3.11** |
| **Tear, N/mm** | **35.72** | **44.40** |
| **Elast Yerzley, %** | **80.42** | **78.89** |

Similar to the tendency observed with elastomeric composites with accelerant TBBS, in the elastomeric composites made with the accelerant MBS, a general improvement in physical properties appears, upon addition of the amine: a significant improvement of tear resistance, tensile strength and modulus, while retaining elasticity.

Note that in addition to amine DDA, the dispersant SBS and filler SiO2 are added to the NC in RRA 190-5. The dispersant added in some modified NC embodiments may further improve properties of the elastomeric composites.

### Modified NCs with/without acetic acid and elastomeric composites produced thereof

Referring back to the modified NC embodiments RRA 181-1 and RRA 189-2, described above, they were prepared using acetic acid as a catalyst for the reaction of the mercaptosilane with the NC. However, RRA 190-5 was prepared without use of the acetic acid. The following examples investigate role of acetic acid in the properties of the elastomeric composites with modified NCs.

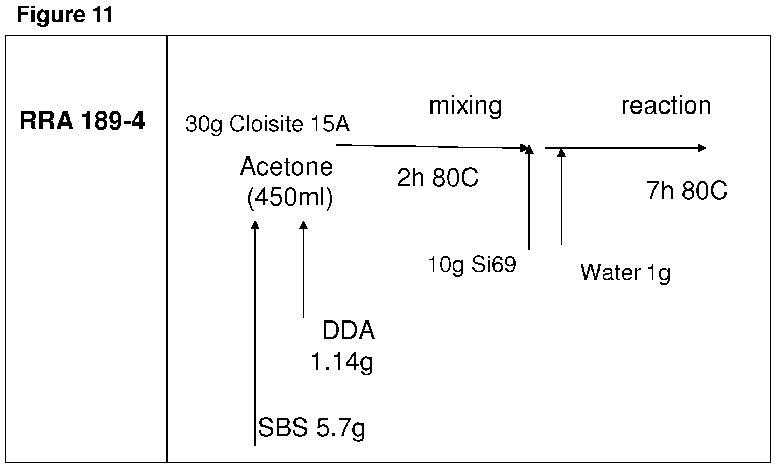

Figure 11 presents production of another modified NC embodiment, RRA 189-4, identical to RRA 189-2 (Figure 6), however in which acetic acid is not added together with the TESPT.

Table 7 lists the ingredients in non-CB composites made from the modified NCs with/without acetic acid.

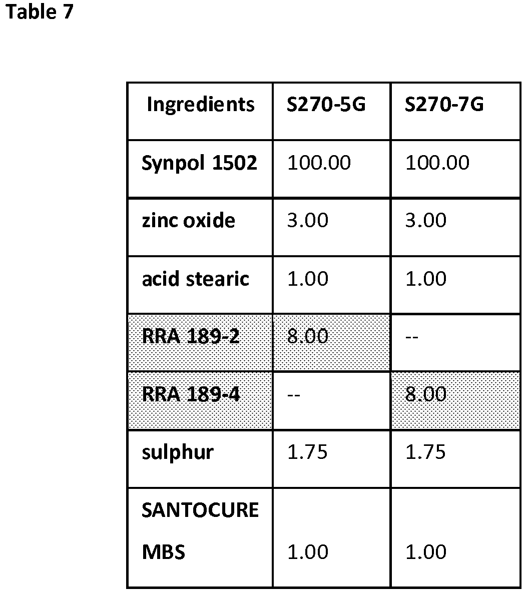

Table 8 shows the properties of the compositions S270-5G and S270-7G as measured at 150°C.

**Table 8**

| | | |
|---|---|---|
| **Properties** | **S270-5G** | **S270-7G** |

| **Rheological properties:** | | |
|---|---|---|
| **MV Ib-in** | 0.64 | 0.64 |
| **t2 min** | 3.47 | 3.54 |
| **t90 min** | 15.57 | 14.63 |
| **tan** | 0.021 | 0.022 |
| **S1-mV** | 7.38 | 7.56 |

| **Mechanical properties:** | | |
|---|---|---|
| **Vulc time min** | 18 | 17 |
| **Hardness ShA** | 55 | 54 |
| **Tensile MPa** | 10.18 | 11.04 |
| **Elongation %** | 438 | 478 |
| **M200 MPa** | 3.58 | 3.53 |
| **M300/M100** | 3.27 | 3.43 |
| **Tear N/mm** | 34.70 | 35.70 |

Tables 9-12 compare various additional compositions made with acetic acid, RRA 189-2, and without acetic acid added, RRA 189-4. In S268-2 and S269-2, the compositions include carbon black (HAF N330); and in S269-11 and S269-21, the compositions include both carbon black and silica.

Note that Struktol is a dispersant.

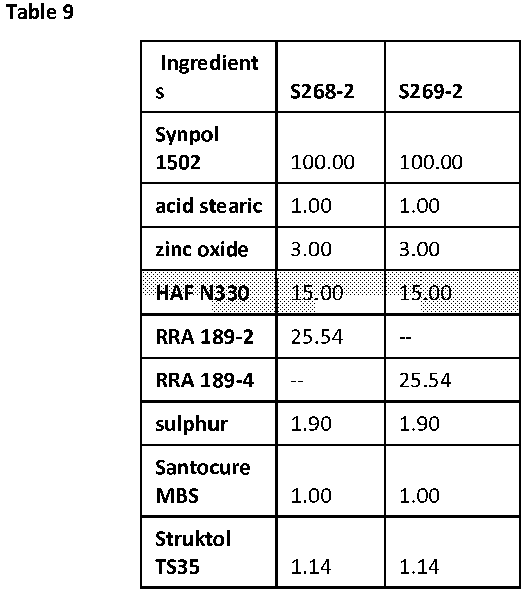

**Table 10**

| | | |
|---|---|---|
| **Properties** | **S268-2** | **S269-2** |

| **Rheological properties:** | | |
|---|---|---|
| **MV Ib-in** | 0.95 | 0.89 |
| **t2 min** | 2.22 | 2.42 |
| **t90 min** | 23.36 | 23.95 |
| **tan** | 0.031 | 0.034 |
| **S1-mV** | 13.73 | 13.36 |

| **Mechanical properties:** | | |
|---|---|---|
| **Vulc time min** | 26 | 26 |
| **Hardness ShA** | 72 | 70 |
| **Tensile MPa** | 23.89 | 24.70 |
| **Elongation %** | 407 | 460 |
| **M200 MPa** | 12.28 | 10.72 |
| **M300/M100** | 2.66 | 2.79 |
| **Tear N/mm** | 61.30 | 57.90 |

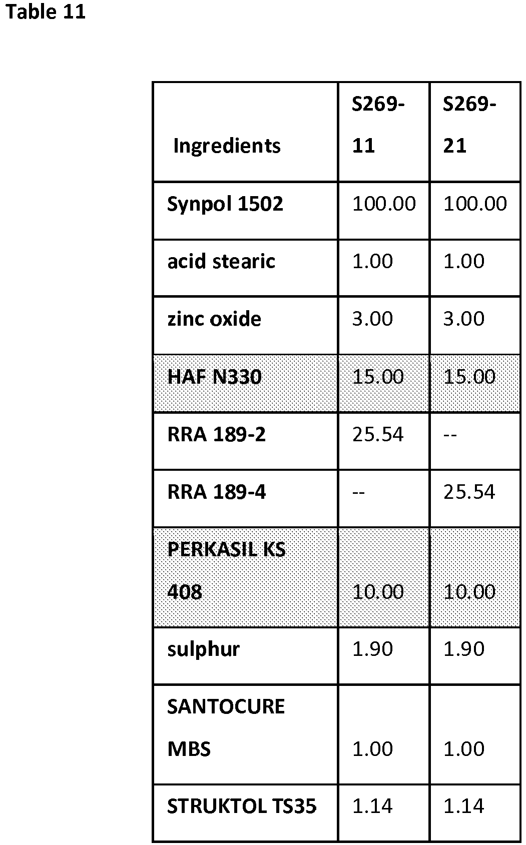

**Table 12**

| **Properties** | **S269-11** | **S269-21** |
|---|---|---|
| **Rheological properties:** | | |
| **MV Ib-in** | 1.66 | 1.63 |
| **t2 min** | 1.94 | 2.15 |
| **t90 min** | 20.16 | 19.94 |
| **tan** | 0.049 | 0.050 |
| **S1-mV** | 13.88 | 13.70 |

| **Mechanical properties:** | | |
|---|---|---|
| **Vulc time min** | 23 | 23 |
| **Hardness ShA** | 71 | 71 |
| **Tensile MPa** | 24.00 | 25.30 |
| **Elongation %** | 448 | 412 |
| **M200 MPa** | 9.51 | 11.42 |
| **M300/M100** | 3.48 | 3.38 |
| **Tear N/mm** | 56.90 | 69.60 |

Tables 8, 12 results indicate that in some compositions, adding acetic acid during preparation of modified NCs may improve the elastomeric composites; however, in other compositions omitting the acetic acid may actually overall improve the properties of the elastomer-NC composites. An improvement of tensile strength and tear resistance is apparent in the compositions S270-7G and S269-21, wherein the modified NC is prepared without acetic acid. Note the particularly high tear threshold of S269-21, which is suitable for tires, despite the elastomeric composite containing only 15 phr of CB.

### Modified NCs with/without silica and elastomeric composites produced thereof

Comparing S270-7G (Table 8) with S274-5G (Table 6), RRA 189-4 in S270-7G is made with DDA and SBS added to the NC, before adding the mercaptosilane. RRA 190-5 is prepared from the same ingredients under similar conditions, however, silica is also added in manufacture of RRA 190-5, after the two hours of mixing the NC with DDA and SBS at elevated temperature (considerably above room temperature), and then the mix with the silica is stirred for 10 hours at 90°C, before the mercaptosilane is added. The other ingredients are identical in the two compared elastomeric composites.

S274-5G, containing RRA 190-5, has a significantly higher tear threshold, and somewhat higher tensile strength, indicating that the addition of silica in production of the modified NC may be beneficial to strength of elastomeric composites made with the NCs embodiments.

### Modified NCs produced with various solvents and elastomeric composites produced thereof

The modified NCs are prepared using at least one solvent: The solvent and the NC are mixed together with at least one amine. Solvents such as Isopropyl alcohol, diacetone alcohol (DAA), chloroform or mixtures thereof may be used, for example, instead of acetone in formerly described hybrids.

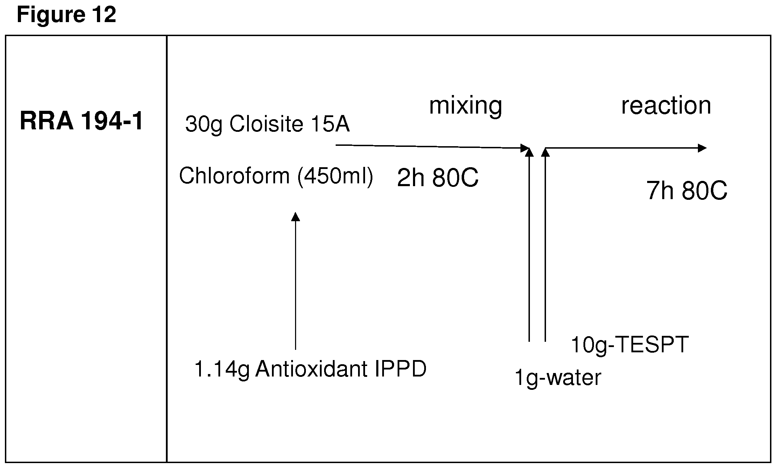

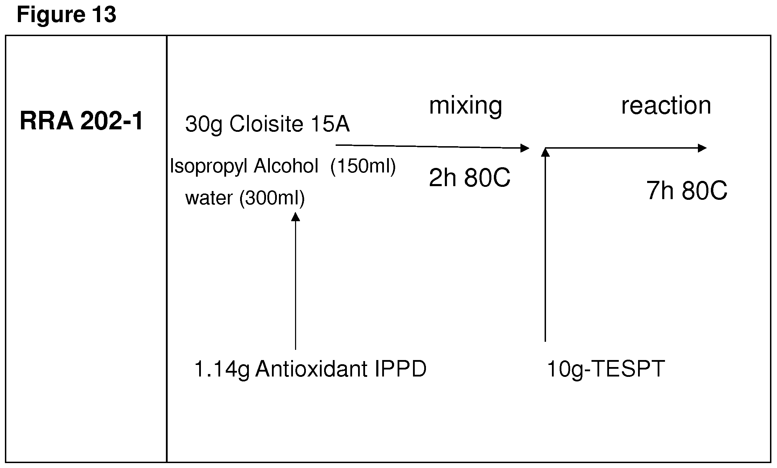

Two similar modified NCs were prepared, one in which the solvent was chloroform, and another in which the solvent was a mixture of isopropanol (IPA) and water. The reactions to produce the modified NCs are shown in Figures 12 and 13.

In both hybrids RRA 194-1 and RRA 202-1, Cloisite 15A (30g) and IPPD (isopropyl p-phenylene diamine) - 1.14g were mixed together in solvent for 2h at 80°C. After that Si69 (TESPT) 10g, water - 1g was added. The silanization reaction was conducted 7 hours at 80°C (measured in glycerin bath). After the 7 hour's reaction the content was poured into a tray and dried approximately 16h at RT.

Table 13 lists ingredients in elastomeric composites made from the hybrids.

**Table 13**

| **Ingredients** | **S298-1G** | **S311-4G** |
|---|---|---|
| **Synpol 1502** | 100.00 | 100.00 |
| **acid stearic** | 1.00 | 1.00 |
| **zinc oxide** | 3.00 | 3.00 |
| **RRA 194-1** | 10.00 | -- |
| **RRA 202-1** | -- | 10.00 |
| **sulphur** | 1.75 | 1.75 |
| **SANTOCURE MBS** | 1.00 | 1.00 |

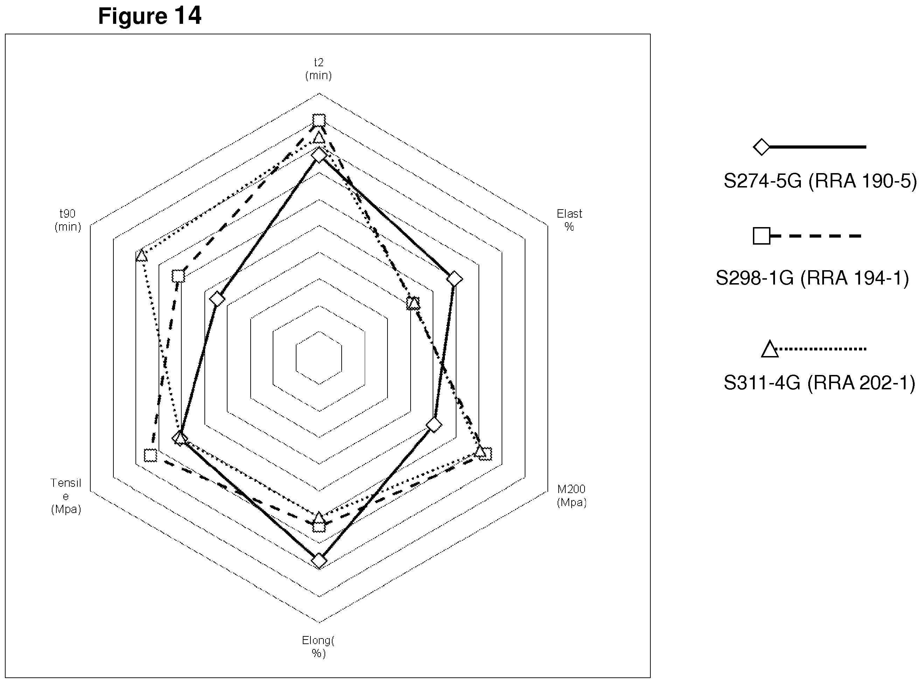

Properties of non-CB elastomeric composites S298-1G and S311-4G comprising the hybrids are listed in Table 14 and presented in Figure 14. (in comparison to S274-5G containing RRA 190-5)

**Table 14**

| **Properties** | **S298-1G** | **S311-4G** |
|---|---|---|
| **Rheological properties:** | | |
| **MV Ib-in** | 0.76 | 0.86 |
| **t2 min** | 3.79 | 3.67 |
| **t90 min** | 17.70 | 14.48 |
| **tan** | 0.028 | 0.001 |
| **S1-mV** | 9.90 | 7.69 |

| **Mechanical properties:** | | |
|---|---|---|
| **Vulc time min** | 20.00 | 17.00 |
| **Hard ShA** | 55 | 56 |
| **Tensile MPa** | 12.36 | 11.04 |
| **Elongation %** | 427 | 420 |
| **M100 MPa** | 2.45 | 2.43 |
| **M200 MPa** | 4.91 | 4.81 |
| **M300 MPa** | 7.87 | 7.39 |
| **M300/M100** | 3.21 | 3.04 |
| **Elast Yerzley %** | 76.16 | 76.26 |

The elastomeric composites have similar properties, which are also similar to the properties of S274-5G, Table 6, which is also without CB and made with MBS, but using acetone as a solvent. Since RRA 190-5 in S274-5G comprises silica, which appears to augment the strength of the elastomeric composites, whereas the hybrids in S298-1G and S311-4G do not contain silica, the solvents IPA +water and chloroform may provide better properties than the solvent acetone. In addition, IPA: water (1:2) and chloroform are much less of a fire hazard.

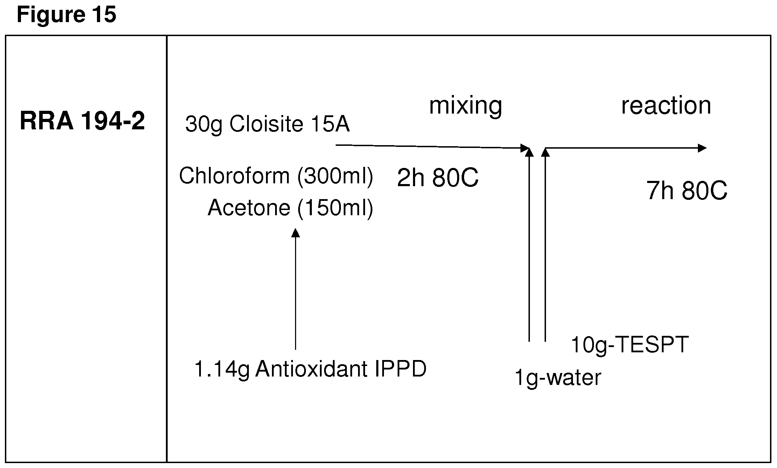

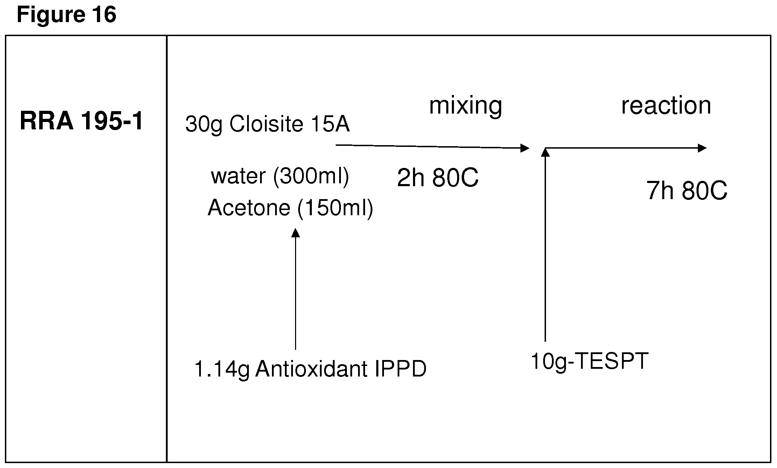

Further hybrids were made with mixtures of acetone and other solvents. RRA 194-2, whose production is schematically shown in Figure 15, is made with chloroform: acetone mixture (2:1), and RRA 195-1, whose production is shown in Figure 16, is made with water: acetone mixture (2:1), under the same conditions and ingredients as RRA 194-2 and RRA 202-1.

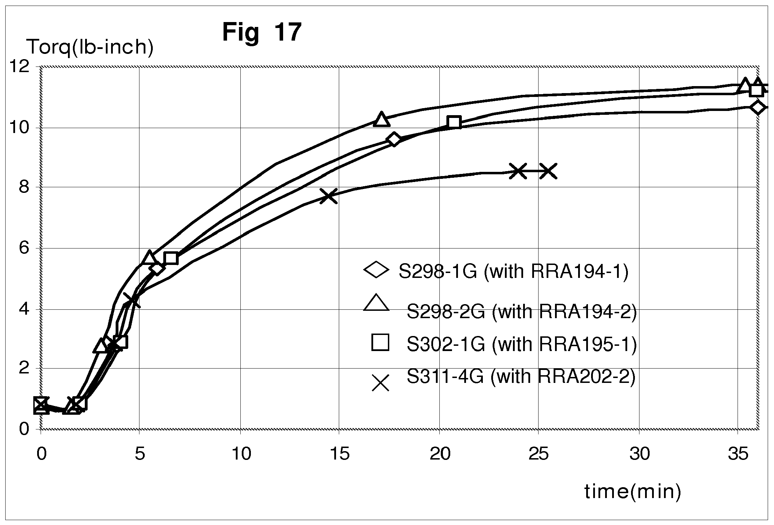

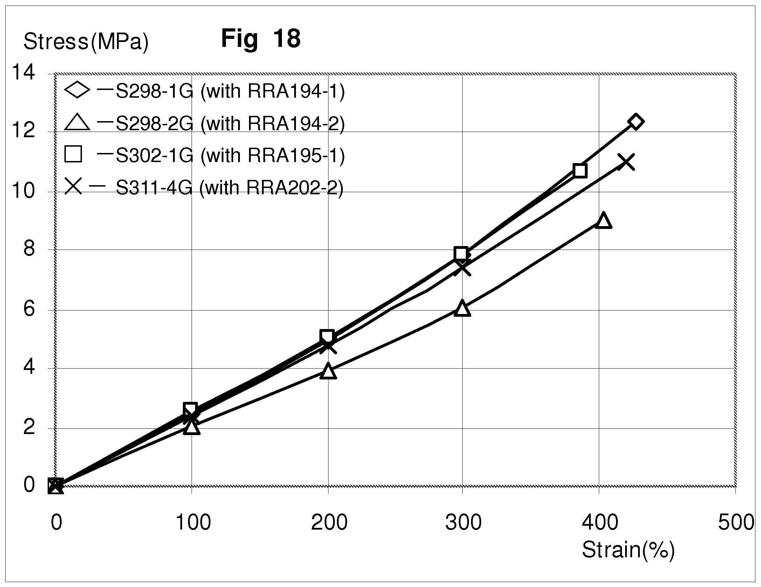

Table 15 lists properties of elastomeric composites made from the hybrids RRA 194-2 and RRA 195-1; Figure 17 presents in a graph readings from a rheometer (Alpha Technologies MDR2000) at 150°C for said elastomeric composites made from hybrids RRA 194-2 and RRA 195-1, as well as said elastomeric composites made from RRA 194-2 and RRA 202-1, and Figure 18 shows in graph form stress-strain properties for the same elastomeric composites.

**Table 15**

| **Properties** | **S298-2G** | **S302-1G** |
|---|---|---|
| **Rheological properties:** | | |
| **MV Ib-in** | 0.76 | 0.82 |
| **t2 min** | 3.05 | 4.00 |
| **t90 min** | 17.17 | 20.85 |
| **tan** | 0.025 | 0.031 |
| **S1-mV** | 10.64 | 10.39 |

| **Mechanical properties:** | | |
|---|---|---|
| **Vulc time min** | 20.00 | 23.00 |
| **Hard ShA** | 56 | 55 |
| **Tensile MPa** | 10.70 | 9.09 |
| **Elongation %** | 387 | 403 |
| **M100 MPa** | 2.60 | 2.08 |
| **M200 MPa** | 5.06 | 3.95 |
| **M300 MPa** | 7.86 | 6.04 |
| **M300/M100** | 3.02 | 2.90 |
| **Elast Yerzley %** | 78.05 | 78.35 |

Compared to RRA 190-5, the composites with the new hybrids-10phr on basis of SBR without filler ,gave essentially the same behavior: approximately the same tensile Strength , Elongation at break, somewhat better Modulus at 200%, and a slight lower elasticity. Vulcanization time was improved.

In general, then, in production of NC hybrids from nanoclays and silanising agents, solvent mixtures containing water, such as the solvents IPA: water, and acetone: water, may be preferable over use of acetone solvent. The amine molecules added to the NCs contain two or more amine groups (nitrogen atoms bonded to an organic substituent). Such amine molecules serve dual purposes: to bond to the nanoclay (first, bonded amine), and to be an antioxidant (second, non-bonded amine). Multi-bonding by many amine groups in an amine molecule may improve the strength of the elastomeric composite.

SBS may be particularly suitable for use in elastomeric composites based on SBR, due to the similarity in structures. For other elastomers, likewise other dispersants may be selected accordance with the similarity to the elastomer structure. For example, SIS (styrene isoprene styrene block copolymer) may be most suitable for use with isoprene rubbers.

The word "comprise", and variations thereof such as "comprises", "comprising" and the like indicate that the components listed are included, but not generally to the exclusion of other components.

## Claims

1. A nanoclay (NC) hybrid comprising a silanised, ammonium-substituted or aminium-substituted montmorillonite having an antioxidant bonded to said substituted montmorillonite via an amine group, said antioxidant comprising two or more amine groups.

2. The nanoclay hybrid of claim 1, wherein said antioxidant is selected from a group comprising: a p-phenylenediamine (p-PDA), 1,1'-(1,2-Ethanediyl)diurea, combinations thereof and derivatives thereof.

3. The nanoclay hybrid of claim 2, wherein the (p-PDA) derivative is selected from a group comprising: N,N-dialkyl-p-PDA, N-alkyl-N-aryl-p-PDA and derivatives thereof and combinations thereof.

4. The hybrid of claim 3, wherein the N-alkyl-N-aryl-p-PDA is selected from: IPPD (N-isopropyl-N'-phenyl-paraphenylenediamine) and 6PPP (N-(1,3-dimethylbutyl)-N'-phenyl-p-phenylenediamine).

5. The nanoclay hybrid of claim 1, further comprising a dispersant.

6. The nanoclay hybrid of claim 1, further comprising a silicate.

7. A method of producing a nanoclay (NC) hybrid, the method comprising:
mixing an amine-containing antioxidant comprising two or more amine groups and an ammonium-substituted or aminium-substituted mortomillonite in a non-flammable solvent at an elevated temperature; and
adding and mixing thereto a silanising agent at an elevated temperature.

8. The method of claim 7, wherein the non-flammable solvent is selected from a group comprising chloroform and mixtures of: diacetone alcohol, isopropanol, or acetone with chloroform or water.

9. The method of claim 7 or 8, further comprising adding acetic acid to the solvent until the solvent has a pH value of 3.

10. The method of claim 7, further comprising adding silica to the solvent between mixing the amine-containing antioxidant and the substituted montmorillonite and adding the silanising agent.

11. An elastomeric composite comprising the nanoclay (NC) hybrid of any one of claims 1-6 and an elastomer.

12. The elastomeric composite of claim 11, further comprising carbon black.

13. The elastomeric composite of claim 11, further comprising sulfur, zinc oxide stearic acid, aliphatic-aromatic soft resin and an accelerator.

14. The elastomeric composite of claim 11, further comprising silica.

## Patentansprüche

1. Nanoton (NC)-Hybrid, umfassend ein silanisiertes, ammoniumsubstituiertes oder aminiumsubstituiertes Montmorillonit mit einem Antioxidans, das über eine Amingruppe an das substituierte Montmorillonit gebunden ist, wobei das Antioxidans zwei oder mehr Amingruppen umfasst.

2. Nanoton-Hybrid nach Anspruch 1, wobei das Antioxidans aus einer Gruppe ausgewählt ist, die Folgendes umfasst: ein p-Phenylendiamin (p-PDA), 1,1'-(1,2-Ethandiyl)Harnstoff, Kombinationen davon und Derivate davon.

3. Nanoton-Hybrid nach Anspruch 2, wobei das (p-PDA)-Derivat aus einer Gruppe ausgewählt ist, die Folgendes umfasst: N,N-Dialkyl-p-PDA, N-Alkyl-N-aryl-p-PDA und deren Derivate und Kombinationen.

4. Hybrid nach Anspruch 3, wobei das N-alkyl-N-aryl-p-PDA ausgewählt ist aus: IPPD (N-Isopropyl-N'-phenyl-paraphenylendiamin) und 6PPP (N-(1,3-Dimethylbutyl)-N'-phenyl-p-phenylendiamin).

5. Nanoton-Hybrid nach Anspruch 1, das ferner ein Dispergiermittel umfasst.

6. Nanoton-Hybrid nach Anspruch 1, das ferner ein Silikat umfasst.

7. Verfahren zur Herstellung eines Nanoton(NC)-Hybrids, wobei das Verfahren Folgendes umfasst:
Mischen eines aminhaltigen Antioxidans mit zwei oder mehr Amingruppen und einem ammonium- oder aminiumsubstituierten Mortomillonit in einem nicht brennbaren Lösungsmittel bei erhöhter Temperatur; und
Zugabe und Mischung eines Silanisierungsmittels bei erhöhter Temperatur.

8. Verfahren nach Anspruch 7, wobei das nicht brennbare Lösungsmittel aus einer Gruppe ausgewählt ist, die Chloroform und Mischungen von Diacetonalkohol, Isopropanol oder Aceton mit Chloroform oder Wasser umfasst.

9. Verfahren nach Anspruch 7 oder 8, das ferner die Zugabe von Essigsäure zum Lösungsmittel umfasst, bis das Lösungsmittel einen pH-Wert von 3 hat.

10. Verfahren nach Anspruch 7, das ferner zwischen dem Mischen des aminhaltigen Antioxidans und des substituierten Montmorillonits die Zugabe von Siliciumdioxid zum Lösungsmittel und die Zugabe des Silanisierungsmittels umfasst.

11. Elastomer-Verbundstoff, der das Nanoton (NC)-Hybrid nach einem der Ansprüche 1 bis 6 und ein Elastomer umfasst.

12. Elastomer-Verbundstoff nach Anspruch 11, der ferner Ruß enthält.

13. Elastomer-Verbundstoff nach Anspruch 11, der ferner Schwefel, Zinkoxid, Stearinsäure, aliphatischaromatisches Weichharz und einen Beschleuniger enthält.

14. Elastomer-Verbundstoff nach Anspruch 11, der ferner Kieselsäure enthält.

## Revendications

1. Nano-argile (NA) hybride, comprenant une montmorillonite silanisée, substituée par un ammonium ou substituée par un aminium, ayant un antioxydant lié à ladite montmorillonite substituée par le biais d'un groupe amine, ledit antioxydant comprenant deux groupes amine ou plus.

2. Nano-argile hybride selon la revendication 1, dans laquelle ledit antioxydant est choisi dans un groupe comprenant : une p-phénylènediamine (p-PDA), une 1,1'-(1,2-éthanediyl)diurée, des combinaisons de celles-ci et des dérivés de celles-ci.

3. Nano-argile hybride selon la revendication 2, dans lequel le dérivé (p-PDA) est choisi dans un groupe comprenant : la N,N-dialkyl-p-PDA, la N-alkyl-N-aryl-p-PDA et des dérivés de celles-ci et des combinaisons de celles-ci.

4. Hybride selon la revendication 3, dans lequel la N-alkyl-N-aryl-p-PDA est choisie parmi : l'IPPD (N-isopropyl-N'-phényl-paraphénylènediamine) et la 6PPP (N-(1,3-diméthylbutyl)-N'-phényl-p-phénylènediamine).

5. Nano-argile hybride selon la revendication 1, comprenant en outre un dispersant.

6. Nano-argile hybride selon la revendication 1, comprenant en outre un silicate.

7. Méthode de production d'un nano-argile (NA) hybride, la méthode comprenant :
le mélange d'un antioxydant contenant une amine comprenant deux groupes amine ou plus et une montmorillonite substituée par un ammonium ou substituée par un aminium, dans un solvant non inflammable à une température élevée ; et
l'addition et le mélange à cela d'un agent de silanisation à une température élevée.

8. Méthode selon la revendication 7, dans laquelle le solvant non inflammable est choisi dans un groupe comprenant le chloroforme et des mélanges d'alcool diacétone, d'isopropanol ou d'acétone avec du chloroforme ou de l'eau.

9. Méthode selon la revendication 7 ou 8, comprenant en outre l'addition d'acide acétique au solvant jusqu'à ce que le solvant ait un pH de 3.

10. Méthode selon la revendication 7, comprenant en outre l'addition de silice au solvant entre le mélange de l'antioxydant contenant un groupe amine et la montmorillonite substituée et l'addition de l'agent de silanisation.

11. Composite élastomère comprenant la nano-argile (NA) hybride selon l'une quelconque des revendications 1 à 6 et un élastomère.

12. Composite élastomère selon la revendication 11, comprenant en outre du noir de carbone.

13. Composite élastomère selon la revendication 11, comprenant en outre du soufre, de l'oxyde de zinc, de l'acide stéarique, de la résine molle aliphatique-aromatique et un accélérateur.

14. Composite élastomère selon la revendication 11, comprenant en outre de la silice.
